# EUROPEAN PATENT SPECIFICATION

(11) **EP 3 221 718 B1**
(45) Date of publication and mention of the grant of the patent: **24.06.2020**
(21) Application number: 15861400.8
(22) Date of filing: 17.11.2015
(51) Int. Cl.: G01T 1/202, C09K 11/62

(54) **NOVEL THALLIUM DOPED SODIUM, CESIUM OR LITHIUM IODIDE SCINTILLATORS**
NEUARTIGE THALLIUMDOTIERTE NATRIUM-, CÄSIUM- ODER LITHIUM-IODID-SZINTILLATOREN
NOUVEAUX SCINTILLATEURS À L'IODURE DE SODIUM, DE CÉSIUM OU LITHIUM DOPÉ AU THALLIUM

(30) Priority: 19.11.2014 US 201462082018 P
(43) Date of publication of application: 27.09.2017
(73) Proprietor: The Regents of the University of California, Oakland, CA 94607 (US)
(72) Inventor: BOURRET-COURCHESNE, Edith, D., Berkeley, CA 94708 (US); BIZARRI, Gregory, A., Berkeley, CA 94702 (US); KHODYUK, Ivan, V., Albany, CA 94706 (US)
(74) Representative: Bartle Read
(86) International application number: PCT/US2015/061111
(87) International publication number: WO 2016/081470

(56) References cited:
- US-A- 5 028 509
- US-A1- 2007 108 393
- US-A1- 2014 319 362
- NAGARKAR V V ET AL: "New Structured Scintillators for Neutron Radiography", PHYSICS PROCEDIA, vol. 69, 10 October 2014 (2014-10-10), pages 161-168, XP029267835, ISSN: 1875-3892, DOI: 10.1016/J.PHPRO.2015.07.023
- SHIRAN, NV ET AL.: 'Eu Doped and Eu, TI Co-Doped Nal Scintillators.' IEEE TRANSACTIONS ON NUCLEAR SCIENCE vol. 57, no. 3, 16 June 2010, pages 1233 - 1235, XP011311627
- GASCON, M ET AL.: 'Scintillation properties of CsBa215 activated with monovalent ions TI+, Na+ and In+.' JOURNAL OF LUMINESCENCE vol. 156, 02 August 2014, pages 63 - 68, XP029061833

## Description

### RELATED PATENT APPLICATIONS

The application claims priority to U.S. Provisional Patent Application Ser. No. 62/082,018, filed November 19, 2014;

### STATEMENT OF GOVERNMENTAL SUPPORT

The invention was made with government support under Grant No. HSHQDC-07-X-00170 awarded by the U.S. Department of Homeland Security, and Contract No. DE-AC02-05CHI 1231 awarded by the U.S. Department of Energy. The government has certain rights in the invention.

### FIELD OF THE INVENTION

The present invention is in the field of inorganic crystals with scintillation properties useful as gamma-ray detectors.

### BACKGROUND OF THE INVENTION

The NaI:Tl scintillator was discovered by Hofstadter in 1948 and since that time it has served as the main workhorse of ionizing radiation detection in many applications [1]. Sixty-six years later, after the discovery of many brighter and faster scintillators (e.g. LaBr₃:Ce, SrI₂:Eu, CsBa₂I₅:Eu, BaBrI:Eu, etc. [2]), NaI:Tl still accounts for about 50% of the market. This can be explained by the main advantages NaI:TI holds compared to other scintillators: low cost, known process to grow large crystals, excellent match between the emission wavelength and the quantum efficiency of conventional PMTs, and relatively fast decay time. At the same time, it has several drawbacks: hygroscopicity, a low effective atomic number and density, a relatively moderate light output (LO) of 44,000 photons/MeV, strong non-proportionality [4,5], and a related poor energy resolution (ER) of 6.5% at 662 keV .

Since 1948, there have been many attempts to improve the scintillation performance of NaI by several different means, mostly crystal growth related, but also through the role of impurities in the scintillation process [6]. Many of the impurities added to the melt which were not found to be beneficial to the light output and energy resolution properties of NaI, including Mn, Pb, Ag, chalcogens (oxides and sulfides), and halides (CI) at low concentrations [7]. In 2010, Shiran et al. found that adding Eu²⁺ to NaI:Tl produces a light output of 48,000 photons/MeV with a 6.2% energy resolution [8]. Based on the greater efficiency of Eu²⁺ emission and the delayed pulse rise times, the accepted scintillation mechanism of this system is that the overlap of the emission band of Tl⁺ and the excitation band of Eu²⁺ causes radiative energy transfer from Tl⁺ to Eu²⁺ luminescent centers within the NaI lattice.

The recent discovery of LaBr₃:Ce ER improvement from 2.7% to 2.0% at 662 keV by co-doping with 200 ppm of Sr [9], created a new wave of excitement in the scintillation community. The possibility of significant improvement in non-proportionality, LO, and ER by co-doping a known scintillator with a small impurity concentration is a very attractive idea. It is especially enticing when applied to a scintillator as cheap to grow and well-studied as Nal. It is known that undoped NaI at LN₂ temperature has a LO above 80,000 photons/MeV [10]. This number is very close to the theoretical limit, which has been estimated using a 5.8 eV band gap and β = 2 [11]. Based on this optimal light output, and assuming perfect proportionality, homogeneity and light collection efficiency, a 2.0% energy resolution is the statistical limit that could be reached at 662 keV with a standard super-bialkali PMT [12]. With the currently available LO of 44,000 photons/MeV, a still impressive 2.8% energy resolution is the statistical limit.
NAGARKAR V V ET AL: "New Structured Scintillators for Neutron Radiography", (PHYSICS PROCEDIA vol. 69, 10 October 2014 (2014-10-10), pages 161-168,) discloses neurton scintillators fabricated in microcolumner formats using physical vapour desposition. US 5028509 discloses a method for converting radiographic image, a radiation energy storage panel having a stimulable phosphor-containing layer and a phosphor, more particularly, it is concerned with a method for converting radiographic image utilizing a stimulable phosphor, a radiation energy storage panel utilizing an alkali halide phosphor activated with thalium and the like, and an alkali halide stimulable phosphor.

### SUMMARY OF THE INVENTION

The present invention provides for a crystal composition or inorganic scintillator as defined in claim 1.

In some embodiments, the crystal composition or inorganic scintillator has the formula:

NaI:Tl, Ln, A, X (Ia).

In some embodiments, the crystal composition or inorganic scintillator has the formula:

CsI:Tl, Ln, A, X (Ib).

In some embodiments, the crystal composition or inorganic scintillator has the formula:

LiI:Tl, Ln, A, X (Ic).

In some embodiments, Tl has a molar percent with the following value: 0.00001 mol % < [Tl] < 10 mol % or up to the solubility limit whatever is higher. In some embodiments, Ln has a molar percent with the following value: 0.00001 mol % < [Ln] < 10 mol % or up to the solubility limit whatever is higher. In some embodiments, A has a molar percent with the following value: 0.00001 mol % < [A] < 10 mol % or up to the solubility limit whatever is higher. In some embodiments, X has a molar percent with the following value: 0 mol % < [X] < 100 mol %. In some embodiments, X has a molar percent with the following value: 0.00001 mol % < [X] < 10 mol % or up to the solubility limit whatever is higher. In some embodiments, Tl, Ln, A, and X each independently has a molar percent with the following value: 0.00001 mol % < [Tl, Ln, A, or X] < 1 mol % or up to the solubility limit whatever is higher. In some embodiments, Tl, Ln, A, and X each independently has a molar percent with the following value: 0.001 mol % < [Tl, Ln, A, or X] < 1 mol % or up to the solubility limit whatever is higher. In some embodiments, Tl, Ln, A, and X each independently has a molar percent with the following value: 0.01 mol % < [Tl, Ln, A, or X] < 1 mol % or up to the solubility limit whatever is higher. In some embodiments, Tl, Ln, A, and X each independently has a molar percent with the following value: 0.1 mol % < [Tl, Ln, A, or X] < 1 mol % or up to the solubility limit whatever is higher.

The present invention provides for a crystal composition or inorganic scintillator having the formula:

MaₓI:Tlₐ, Ln_{b}, A_{c}, X_{d} (II);

wherein Ma is Na, Cs, or Li, Ln is a lanthanide, or a mixture of lanthanides, A is an alkaline earth metal, and X is Sc, Ti, V, Cr, Mn, Fe, Co, Ni, Cu, Zn, Y, Zr, Pd, Ag, Cd, Hf, Ta, W, Pt, Au, Al, Ga, In, Ge, Sn, Pb, N, P, As, Sb, Bi, O, S, Se, Te, or a mixture thereof; wherein x has a value equal to x = 1 - a - b' - c' - 2d and 0 < x < 1, a has a value equal to 0 < a < 1, b has a value equal to 0 < b' < 1, c has a value equal to 0 < c' < 1, and d has a value equal to 0 ≤ 2d < 1; wherein when Ln has a valence of 2+, b' is 2b or when Ln has a valence of 3+, b' is 3b, and when A has a valence of 1+, c' is c or when A has a valence of 2+, c' is 2c.

In some embodiments, the crystal composition or inorganic scintillator having the formula:

NaₓI:Tlₐ, Ln_{b}, A_{c}, X_{d} (IIa).

In some embodiments, the crystal composition or inorganic scintillator having the formula:

CsₓI:Tlₐ, Ln_{b}, A_{c}, X_{d} (IIb).

In some embodiments, the crystal composition or inorganic scintillator having the formula:

NaₓI:Tlₐ, Ln_{b}, A_{c}, X_{d} (IIc).

In some embodiments, the crystal composition or inorganic scintillator provides for at least 40,000 photons per MeV.

In some embodiments, X is Mg, Ca, Sr, or Ba, or a mixture thereof.

In some embodiments, the lanthanide is La, Ce, Pr, Nd, Pm, Sm, Eu, Gd, Tb, Dy, Ho, Er, Tm, Yb, Lu, or a mixture thereof. Examples of lanthanides with a valence of 2+ are Eu and Yb. Examples of lanthanides with a valence of 3+ are Ce and Yb. The inorganic scintillator is a scintillator that produces a bright luminescence upon irradiation by a suitable radiation, such as gamma radiation.

In some embodiments, the inorganic scintillator is a ceramic.

In some embodiments, the energy resolution of the inorganic scintillator is in the range of about 2.5 to about 5% at about 662 keV.

In some embodiments of the invention, the inorganic scintillator is a single crystal having at least one dimension of a length of at least 1 mm, at least 5 mm, at least 1 cm, or at least 3 cm, or a length at least sufficient to stop or absorb gamma-radiation.

The present invention provides for an inorganic scintillator described and/or having one or more of the properties described in Example 1 or 2.

The present invention also provides for a composition comprising essentially of a mixture of iodide salts (comprising Nal, TlI, lanthanides iodide, an alkaline earth metal iodide, and/or X iodide) useful for producing crystal composition of the present invention, wherein each elements relative to each other within the composition have a stoichiometry essentially equivalent to the stoichiometry of the elements in the compounds of formulae (I)-(II), or any other formulae, as described herein.

The iodide salts can be powdered crystals. The iodide salts are essentially pure. Such iodide salts are commercially available.

The present invention further provides for a method for producing the composition comprising an inorganic scintillator as described herein comprising: (a) providing a composition comprising essentially of a mixture of iodide salts described herein useful for producing the inorganic scintillator as described herein, (b) heating the mixture so that the iodide salts start to react, and (c) cooling the mixture to room temperature such that the composition comprising an inorganic scintillator is formed.

The invention provides for a device comprising a composition comprising an inorganic scintillator of the present invention and a photodetector. The device is useful for the detection of an ionizing radiation, such as gamma radiation. The device is useful for industrial, medical, protective and defensive purpose or in the oil and nuclear industry.

In some embodiments of the invention, the device is a gamma ray (or like radiation) detector which comprises a single crystal of inorganic scintillator or crystal composition of the present invention. When assembled in a complete detector, the scintillator crystal is optically coupled, either directly or through a suitable light path, to the photosensitive surface of a photodetector for generation of an electrical signal in response to the emission of a light pulse by the scintillator. The inorganic scintillator of the invention possesses certain important characteristics, most notably high light output, very short decay time and high detection efficiency, that make it superior to prior scintillators as a gamma ray or like radiation detector, in particular for homeland security applications, such as nuclear material detection.

### BRIEF DESCRIPTION OF THE DRAWINGS

The foregoing aspects and others will be readily appreciated by the skilled artisan from the following description of illustrative embodiments when read in conjunction with the accompanying drawings.
Figure 1 shows the light output of melt-mix NaI samples.
Figure 2 shows the energy resolution of melt-mix NaI samples.
Figure 3 shows the energy resolution versus light output of NaI:0.25%Tl⁺, 0.2%Ca²⁺, 0.1%Eu²⁺. Full symbols represent average and standard deviations for each part of the crystal. Inset: Picture of crystal rapidly grown in quartz ampoule.
Figure 4 shows the pulse-height spectra of 137Cs recorded with commercial NaI:Tl and NaI doped with 0.1%Tl⁺, 0.2%Ca²⁺, and 0.1%Eu²⁺.
Figure 5 is a diagrammatic view of one embodiment of a scintillation detector in accordance with the present invention.
Figure 6 shows normalized X-ray luminescence spectra of selected experimental designs.
Figure 7 shows response surfaces of NaI:Tl, X, Y samples energy resolution as a function of [Tl⁺], [Eu²⁺], [IIA²⁺], and IIA type. To plot response surfaces, IIA²⁺ element types were substituted with corresponding ionic radii in pm: Mg-72, Ca-100, Sr-118, and Ba-135.Xx

### DETAILED DESCRIPTION OF THE INVENTION

Before the present invention is described, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed within the invention. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can be used in the practice or testing of the present invention, the preferred methods and materials are now described. All publications mentioned herein are incorporated herein by reference to disclose and describe the methods and/or materials in connection with which the publications are cited.

As used in the specification and the appended claims, the singular forms "a", "an", and "the" include plural references unless the context clearly dictates otherwise. Thus, for example, reference to a "crystal" includes a single crystal as well as a plurality of crystals.

The terms "optional" or "optionally" as used herein mean that the subsequently described feature or structure may or may not be present, or that the subsequently described event or circumstance may or may not occur, and that the description includes instances where a particular feature or structure is present and instances where the feature or structure is absent, or instances where the event or circumstance occurs and instances where it does not.

The term "about" refers to a value including 10% more than the stated value and 10% less than the stated value.

These and other objects, advantages, and features of the invention will become apparent to those persons skilled in the art upon reading the details of the invention as more fully described below.

### The Crystal Composition / Inorganic Scintillator

Useful qualities for the crystal compositions or inorganic scintillators of the present invention are high light yields, fast luminescence decay (such as, equal to or less 3000 ns, or equal to or less 2000 ns, or equal to or less 1000 ns), good stopping power, high density, good energy resolution, ease of growth, and stability under ambient conditions.

The crystal composition or inorganic scintillator can be in a polycrystalline powder or a single crystal form. The crystal can be any size with an average volume of at least 0.001 mm³, at least 1 mm³, at least 5 mm³, at least 10 mm³, at least 100 mm³, at least 3 cm³, at least 1 cm³, or at least 10 cm³. The crystal can be any size with at least one dimension of the crystal having a length of at least 100 µm, at least 1 mm, at least 2 mm, at least 5 mm, at least 1 cm, at least 3 cm, at least 5 cm, or at least 10 cm. In some embodiments of the invention, the crystal has at least one dimension having a length that is of sufficient length, or depth, to stop or absorb gamma-radiation in order to electronically detect the gamma-radiation.

The crystal composition or inorganic scintillators of the present invention are useful as they are scintillators and they produce a useful bright and fast scintillation in response to irradiation by short-wavelength high energy light, such as x-ray or gamma rays. The crystals of the inorganic scintillator also have the added advantage of having the property of readily growing into crystals. Large size crystals can be grown by the following technique: Bridgman growth and related techniques, Czochralski growth and related techniques, the traveling heater method and related techniques.

### Characterization of the Crystal Composition / Inorganic Scintillator

The crystals of the invention can be characterized using a variety of methods. The crystals can be characterized regarding X-ray diffractometry, X-ray luminescence spectra, X-ray fluorescence for concentration of activators, and/or pulsed X-ray time response. X-ray diffractometry determines the composition of crystalline solids, such as crystalline phase identification. X-ray luminescence spectra determines the spectra components. Pulsed X-ray time response determines luminosity, decay times, and fractions. X-ray luminescence is used to determine the relative luminosity of a crystal. An X-ray excited emission spectra is obtained of a crystal by irradiating the crystal with an X-ray and collecting the emission light, such as at 90°, by a CCD detector.

In some embodiments, the luminosity of the crystal composition or inorganic scintillator is more than the luminosity of yttrium aluminium perovskite (YAP) and/or bismuth germanate (BGO). In further embodiments of the invention, the luminosity of the crystal composition or inorganic scintillator is more than double the luminosity of YAP and/or BGO.

In some embodiments, the crystal composition or inorganic scintillator is NaI 0.1 mol % Tl co-doped with 0.2 mol % Ca and 0.1 mol % Eu having a luminescence output equal to or more than 52,000 photons/MeV, and/or a 4.9% or lower energy resolution at 662keV.

In some embodiments, the crystal composition or inorganic scintillator is Nal: 0.25%Tl, 0.2%Ca, 0.1%Eu having a luminescence output of equal to or more than 42,800 ph/MeV, and/or a 5.4% or lower energy resolution at 662 keV.

In some embodiments, the crystal composition or inorganic scintillator has a luminescence output of equal to or more than 42,800 ph/MeV, and/or a 5.4% or lower energy resolution at 662 keV. In some embodiments, the inorganic scintillator has a luminescence output of equal to or more than 52,000 ph/MeV, and/or a 4.9% or lower energy resolution at 662 keV.

### Preparation of the Crystal Composition / Inorganic Scintillator

The crystal composition or inorganic scintillators of the invention can be prepared using a variety of methods. For example, the crystals useful for fabrication of luminescent screens can be prepared by a solid-state reaction aided, or optionally not aided, by a flux of iodides as described herein. In some embodiments, the single crystals are prepared by providing a composition comprising essentially of a mixture of iodide salts useful for producing the inorganic scintillator as described herein. The mixture is heated to a temperature of up to about 550-900°C using a simple programmable furnace to produce a reactive molten mixture. The reaction is maintained at temperature for the mixture to fully react and produce the desired melt. The resultant molten product of reaction is then cooled slowly at about 2 to 5°C/minute.

A particular method of preparing the crystal composition or inorganic scintillator of the invention is as follows: Bridgman growth and related techniques, Czochralski growth and related techniques, the traveling heater method and related techniques. These methods can be used to produce the crystal composition or inorganic scintillator as single crystals on a one-by-one basis.

The Bridgman growth technique is a directional solidification process. The technique involves using an ampoule containing a melt which moves through an axial temperature gradient in a furnace. Single crystals can be grown using either seeded or unseeded ampoules. The Bridgman growth technique is taught in Robertson J. M., 1986, Crystal growth of ceramics: Bridgman-Stockbarger method in Bever: 1986 "Encyclopedia of Materials Science and Engineering" Pergamon, Oxford pp. 963-964, which is incorporated by reference.

The Czochralski growth technique comprises a process of obtaining single-crystals in which a single crystal material is pulled out of the melt in which a single-crystal seed is immersed and then slowly withdrawn; desired optical properties and doping level is accomplished by adding dopants to the melt. The Czochralski growth technique is taught in J. Czochralski, "Ein neues Verfahren zur Messung der Kristallisationsgeschwindigheit der Metalle" [A new method for the measurement of the crystallization rate of metals], Z. Phys. Chemie 92 (1918) 219-221, which is incorporated by reference. The method is well-know to those skilled in the art in producing a wide variety of componds, including semiconductors and scintillator materials (such as LaBr₃:Ce).

The traveling heater method is described in Triboulet, Prog. Cryst. Gr. Char. Mater., 128, 85 (1994) and Funaki et al., Nucl. Instr. And Methods, A 436 (1999).

A particular method of preparing crystal composition or inorganic scintillators of the invention is the ceramic method which comprises the following steps: The reactant mixture is placed in a container, such as a glove box, filled with one or more inert gas, such as nitrogen gas. The container is under a very dry condition. The dry condition is required due to the hygroscopic nature of the iodide within the reactant mixture. The two or more powder reactants are ground together, such as with a mortar and pestle, for a sufficient period, such as about 10 minutes, to produce a reactant mixture. When each iodide salt is added to the powder reactants for grinding, a suitable organic solvent or solution can be further added, and grinding can take place until the mixture appears dry. The reactant mixture is sintered under high temperature and pressure.

In some embodiment of the invention, the single crystals of the crystal composition or inorganic scintillator can be grown by melting and re-solidifying the pre-synthesized compounds in powder form, such as described herein, or directly from melting the mixtures of the iodide salts used as activators. To grow best performing crystals the starting compounds might need to be purified further by zone refining.

Growing the single crystal involves loading the mixtures, such as described herein, in a quartz ampoule in a dry environment and sealing the ampoule using a high temperature torch, maintaining the dry environment at a reduced pressure, in the ampoule. The ampoule is then placed in a furnace. The growth of the crystal can be performed by a variation of the known vertical "Bridgman" technique. The compound is melted, let to homogenized at a temperature above the melting point and the compound is solidified in a directional manner in a temperature gradient. The ampoule is shaped to provide a nucleation site at the bottom (conical shape). The solidification front moves upward. Horizontal configurations and other growth techniques such as Czochralski (may need to pressurized the growth chamber) could be used.

In some embodiments of the invention, the method for producing the composition comprising the crystal composition or inorganic scintillator of the present invention comprises: (a) providing a sealed container containing the composition comprising essentially of a mixture of iodide salts useful for producing the inorganic scintilaltor of the present invention, (b) heating the container sufficiently to produce a melted mixture, and (c) solidying or growing a crystal from the melted mixture, such that the composition comprising the inorganic scintillator of the present invention is produced.

In some embodiments of the invention, the method for producing the composition comprising the crystal composition or inorganic scintillator of the present invention comprises: (a) providing the composition comprising essentially of a mixture of iodide salts, (b) loading the iodide salts in a suitable container, (c) sealing the container, (d) heating the container sufficiently to produce a melted mixture, and (e) solidying or growing a crystal from the melted mixture, such that the composition comprising the inorganic scintillator of the present invention is produced.

In some embodiments, the container is a quartz container. In some embodiments, the sealed container is an ampoule. In some embodiments, the heating takes place in a furnace. The mixture is heated to a suitable temperature to melt the iodides in the mixture. One skilled in the art can easily determine a temperature or a range of temperatures suitable for melting the mixture of iodides. The furnace can be a Bridgman-type or float-zone-type (mirror-furncae where heat s supplied by halogen lamps, or induction heated furnace). When using a Bridgman configuration, the crystal is solidified from the melt directionally. When using the float-zone configuration, the crystal is solidified from a narrow molten zone of a pre-reacted charge. In both cases the growth rate of the crystal can be within a thermal gradient across the solid/liquid interface. The ratio of gradient to growth rate determines the stability of the interface. The growth rate can be decreased if the thermal gradient is increased. Typical thermal gradient can be more than 1°C/cm. Once all solidified, the crystal is colled slowly. The cooling rate can be in the range from less than 1°C/hr to more than 20°C/hr.

In some embodiments, the method of making a scintillation Tl, Ln, A, and/or X-doped Lithium, Sodium or Cesium Iodide crystal having an energy resolution for a full energy peak in the range from 2.5% to 5% at 662 keV, comprises: (a) growing a boule of said crystal; (b) cutting the boule into a plurality of crystal samples; and (c) annealing under an inert (such as Argon) or a reactive atmosphere (such as iodine) at high temperature to further improve the properties of the material. In some embodiments, annealing comprises rapid thermal annealing or furnace annealing. In some embodiments, the temperature used has a value higher than room temperature (25°C) but lower than a melting temperature of the formula. Annealing can take place over a period of up to several days depending on the composition.

In some embodiments, the method of making a scintillation Tl, Ln, A, and/or X-doped Lithium, Sodium or Cesium Iodide crystal having a light output change not exceeding 25% at 225°C, comprises: (a) growing a boule of said crystal; (b) cutting the boule into a plurality of crystal samples; and (c) annealing under an inert (such as Argon) or a reactive atmosphere (such as iodine) at high temperature to further improve the properties of the material. In some embodiments, the temperature used has a value higher than room temperature (25°C) but lower than a melting temperature of the formula. Annealing can take place over a period of up to several days depending on the composition.

In some embodiments, the method further comprises annealing should be noted. The crystal or polycrystalline powders can be annealed under an inert gas (such as Argon) or a reactive atmosphere (such as iodine) at high temperature to further improve the properties of the material. Annealing can comprise rapid thermal annealing or furnace annealing. In some embodiments, the temperature used has a value higher than room temperature (25°C) but lower than a melting temperature of the formula. Annealing can take place over a period of up to several days depending on the composition.

The resulting crystals are then characterized by the methods described herein. The resulting crystals also have properties similar to those described herein.

### Application of the Crystal Composition / Inorganic Scintillators

The present invention provides for a gamma ray or x-ray detector, comprising: a scintillator composed of a transparent single crystal of the inorganic scintillator of the present invention, and a photodetector optically coupled to the scintillator for producing an electrical signal in response to the emission of a light pulse by the scintillator.

The inorganic scintillators of this invention have many advantages over other known crystals. The inorganic scintillators produce a luminescence in response irradiation, such as irradiation by alpha-, beta-, or gamma-radiation, that is brighter and faster than known and commercially used scintillators. The scintillating crystals have a number of applications as detectors, such as in the detection of gamma-ray, which has use in national security, such as for detection of nuclear materials, and medical imaging applications.

The invention is useful for the detection of ionizing radiation. Applications include medical imaging, nuclear physics, nondestructive evaluation, treaty verification and safeguards, environmental monitoring, and geological exploration. This will be a major improvement, providing much finer resolution, higher maximum event rates, and clearer images.

Also, activated inorganic scintillator crystals of the present invention can be useful in positron emission tomography (PET).

The invention also relates to the use of the scintillating material above as a component of a detector for detecting radiation in particular by gamma rays and/or X-rays. Such a detector especially comprises a photodetector optically coupled to the scintillator in order to produce an electrical signal in response to the emission of a light pulse produced by the scintillator. The photodetector of the detector may in particular be a photomultiplier, photodiode, or CCD sensor.

A particular use of this type of detector relates to the measurement of gamma or x-ray radiation, such a system is also capable of detecting alpha and beta radiation and electrons. The invention also relates to the use of the above detector in nuclear medicine apparatuses, especially gamma cameras of the Anger type and positron emission tomography scanners (see, for example C. W. E. Van Eijk, "Inorganic Scintillator for Medical Imaging", International Seminar New types of Detectors, 15 19 May 1995--Archamp, France. Published in "Physica Medica", Vol. XII, supplement 1, June 96.

In another particular use, the invention relates to the use of the above detector in detection apparatuses for oil drilling (see, for example "Applications of scintillation counting and analysis", in "Photomultiplier tube, principle and application", chapter 7, Philips.

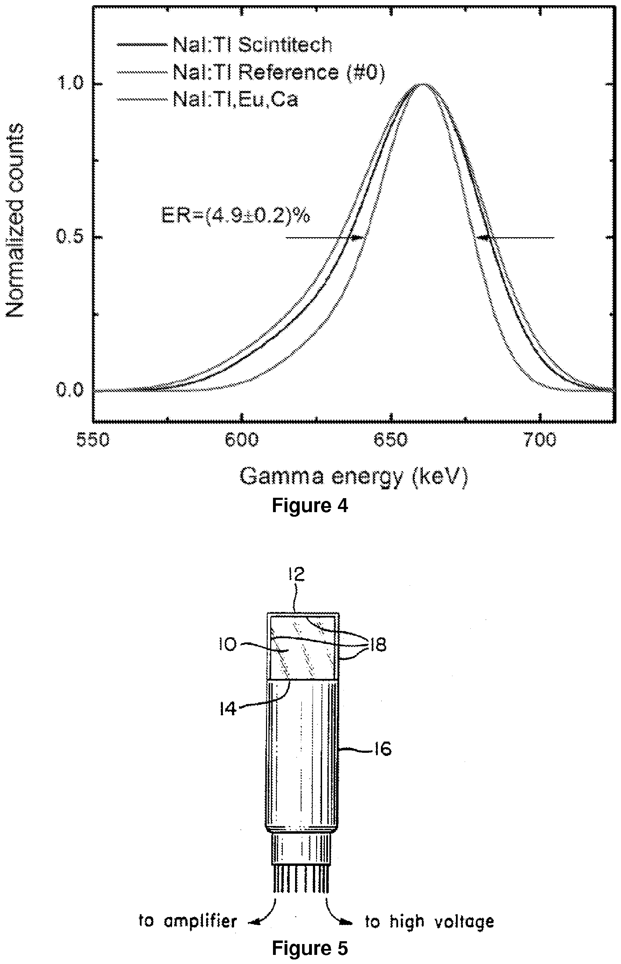

One embodiment of the invention is shown in Figure 5 which shows a gamma ray detector. The detector can be one as described in U.S. Patent No. 4,958,080. It will be understood, of course, that the utility of the novel single crystal inorganic scintillator of the invention is not limited to the detection of gamma radiation but that it has general application to the detection of other types of like radiation, e.g. X-rays, cosmic rays, and energetic particles.

In Figure 5, a single crystal inorganic scintillator 10 is shown encased within the housing 12 of a gamma ray detector. One face 14 of the scintillator is placed in optical contact with the photosensitive surface of a photomultiplier tube 16. Alternatively, the light pulses could be coupled to the photomultiplier via light guides or fibers, lenses, mirrors, or the like. The photomultiplier can be replaced by any suitable photodetector such as a photodiode, microchannel plate, etc. In order to direct as much of each light flash to the photomultiplier as possible, the other faces 18 of the inorganic scintillator are preferably surrounded or covered with a reflective material, e.g. Teflon tape, magnesium oxide powder, aluminum foil, or titanium dioxide paint. Light pulses emitted by the crystal inorganic scintillator upon the incidence of radiation are intercepted, either directly or upon reflection from the surfaces 18, by the photomultiplier, which generates electrical pulses or signals in response to the light pulses. These electrical output pulses are typically first amplified and then subsequently processed as desired, e.g. in a pulse height amplifier, to obtain the parameters of interest regarding the detected radiation. The photomultiplier is also connected to a high voltage power supply, as indicated in Figure 4. Other than the inorganic scintillator, all of the components and materials referred to in connection with Figure 4 are conventional, and thus need not be described in detail.

It is to be understood that, while the invention has been described in conjunction with the preferred specific embodiments thereof, the foregoing description is intended to illustrate and not limit the scope of the invention. Other aspects, advantages, and modifications within the scope of the invention will be apparent to those skilled in the art to which the invention pertains.

The invention having been described, the following examples are offered to illustrate the subject invention by way of illustration, not by way of limitation.

### EXAMPLE 1

### Combinatorial approach to NaI energy resolution optimization via co-doping with Eu2+ and alkaline earth metals

The light output and energy resolution of NaI 0.1 mol % Tl are improved by co-doping it with 0.2 mol % Ca and 0.1 mol % Eu. The performance of the best single crystalline sample grown by the vertical Bridgman technique is 52,000± 2600 photons/MeV and 4.9±0.2% energy resolution at 662keV.

Presented herein are results on NaI:Tl energy resolution improvement through co-doping by Eu2+ and alkaline earth metals (Mg, Ca, Sr and Ba), using a combinatorial approach and multi-regression analysis [13]. A series of samples are synthesized to optimize several parameters, and the best sample is shown to have a significant improvement in ER over commercial standards.

It has been proposed to generate dense combinatorial libraries of new solid-state materials by thin film deposition techniques for chemical, biological, electronic, magnetic, optical and luminescent materials discovery [14-16]. The design of experiment leveraged by multi-regression analysis is found to be a very powerful technique in the optimization of phosphors and luminescent materials [17-19]. These methods are used in order to enhance the ongoing, high-throughput study of scintillator materials [20].

At the core of this experimental strategy was developed by Taguchi et al. [21]. It allows experimenters to study the effects of multiple factors on the desired output parameter simultaneously, by performing experiments at different levels of the factors. Specific arrangement of the experimental set using an orthogonal array [22] is essential for this type of experimental design. It allows one to explore the performance of a material in a multi-dimensional parametric space using the least possible number of experiments. The influence of four factors at four levels each are studied for their effect on the ER and LO of Nal. The factors and corresponding levels that are selected for the experiment, which are listed in TABLE 1, are: Tl⁺ concentration, alkaline earth metal, concentration of the co-dopant element, and Eu²⁺ concentration.

**Table 1. Factors and levels used for NaI energy resolution and light output improvement.**

| **Factor** | **Level 1** | **Level 2** | **Level 3** | **Level 4** |
|---|---|---|---|---|
| [Tl⁺], mol % | 0.0 | 0.1 | 0.25 | 0.5 |
| Co-dopant | Mg | Ca | Sr | Ba |
| [Co-dopant]. mol % | 0.1 | 0.2 | 0.4 | 0.8 |
| [Eu²⁺]. mol % | 1.0 | 0.5 | 0.1 | 0.0 |

In the case of sequential experimental design, to determine the influence of these 4 factors at 4 levels each on NaI performance would require the synthesis and measurement of 256 compounds. This is too many samples even for a high-throughput facility [20], bearing in mind that every composition needs to be produced in a single crystalline form to be able to measure ER and LO. Using the Taguchi methodology, the number of samples required is reduced to 16. A standard L-16 orthogonal array [22] is used to generate the experimental set listed in TABLE 2. Control sample #0, doped with 0.1 mol % Tl+ and no other co-dopants, is included in the experimental set for comparison purposes.

**Table 2. Orthogonal experimental set.**

| **Design #** | **[TI⁺]** | **HA** | **[HA]** | **[Eu²⁺]** |
|---|---|---|---|---|
| 0 | 0.1 | - | 0 | 0 |
| 1 | 0.0 | Mg | 0.1 | 1.0 |
| 2 | 0.0 | Ca | 0.2 | 0.5 |
| | | | | |
| 3 | 0.0 | Sr | 0.4 | 0.1 |
| 4 | 0.0 | Ba | 0.8 | 0.0 |
| 5 | 0.1 | Mg | 0.2 | 0.0 |
| | | | | |
| 6 | 0.1 | Ca | 0.1 | 0.1 |
| 7 | 0.1 | Sr | 0.8 | 0.5 |
| 8 | 0.1 | Ba | 0.4 | 1.0 |
| 9 | 0.25 | Mg | 0.4 | 0.5 |
| 10 | 0.25 | Ca | 0.8 | 1.0 |
| 11 | 0.25 | Sr | 0.1 | 0.0 |
| | | | | |
| 12 | 0.25 | Ba | 0.2 | 0.1 |
| 13 | 0.5 | Mg | 0.8 | 0.1 |
| 14 | 0.5 | Ca | 0.4 | 0.0 |
| | | | | |
| 15 | 0.5 | Sr | 0.2 | 1.0 |
| 16 | 0.5 | Ba | 0.1 | 0.0 |

Starting materials of NaI, MgI₂, CaI₂, SrI₂, BaI₂, TlI and EuI₂ are purchased from Sigma-Aldrich in the form of anhydrous beads with the highest commercially-availablepurity (mostly 5N). An argon-filled drybox maintained below 1ppm of O₂ and H₂O is used to weigh the stoichiometric masses of materials and combine them in quartz ampules. After this, the ampules are sealed under vacuum using a hydrogen-oxygen torch, and placed in a horizontal furnace, oriented at 45° in order to facilitate convection mixing (melt-mix). Samples are heated to 675 °C, in order to melt the NaI (melting point 661 °C) and held at this temperature for 6 hours, in order to obtain complete mixture of the liquefied contents of the quartz ampule. After soaking above the melting point, samples are cooled down to 300 °C at 0.1 °C/min, in order to allow for solid state diffusion of inhomogeneities above one-half the melting temperature. Below 300 °C the samples are cooled at 10 °C/hr.

After synthesis, samples are transferred back inside the drybox, and two air-tight quartz cuvettes are prepared, each respectively containing 0.5 - 2 mm sized crystals of material from top and bottom parts of each sample boule. X-ray luminescence (XRL), optical luminescence (OL) and pulsed x-ray decay (PXR) of the top and bottom parts of every synthesis are measured and compared to ensure homogeneity of scintillation performance and proper mixing of every sample. Also at least three single crystalline fragments several millimeters across ae selected for pulse-height measurements.

A standard ¹³⁷Cs radioactive source is used to determine the light output and energy resolution of each sample using the pulse height measurement technique. Spectra are collected using Hamamatsu R6231-100 photomultiplier tube (PMT) set to -700V connected to a Canberra 2005 preamplifier, a Canberra 2022 spectroscopic amplifier, and an Amptek MCA multichannel analyzer. A 12 µs shaping time is used for the measurements to ensure full collection of the emitted light. A satisfactory signal-to-noise ratio is ensured by collecting at least 10,000 counts for each photopeak, which are fit using a superposition of Gaussian functions corresponding to the photopeak, the X-ray escape peak, and an exponential background to find the centroid and full-width at half-maximum. Samples are optically coupled onto the window of the PMT with Viscasil 600,000 (GE) optical grease, and covered with layers of reflecting tape. All measurements are carried out using samples of sizes ranging from 5 to 10 mm³.

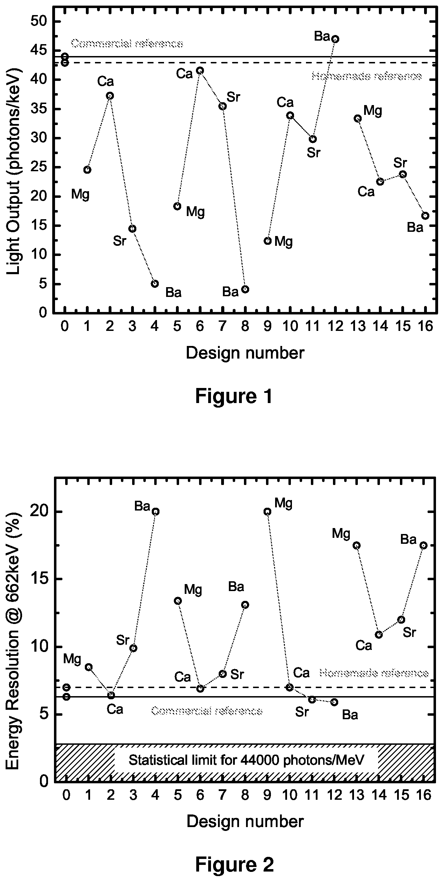

Light output and energy resolution for the samples from the orthogonal experimental set (Table 2) as a function of composition design are shown in Figures 1 and 2, respectively. Light output is estimated by comparison of the photopeak position with the response of a 5 mm³ commercial NaI:Tl single crystal from Scintitech measured under identical conditions, and taking into account the PMT quantum efficiency. 44,000 ph/MeV LO is recorded for the commercial sample, with an energy resolution of 6.3% measured at 662 keV (solid line in Figs. 1 and 2). In addition to the orthogonal set, a homemade reference NaI:0.1mol % Tl⁺ with LO of 43,000 ph/MeV and ER of 7% at 662 keV is synthesized using the same melt-mix technique (dashed line in Figs. 1 and 2).

To correct for the quantum efficiency, an XRL spectrum is measured for every design, using the material encapsulated in quartz cuvettes [20]. At least three single crystalline samples are measured for every composition design to ensure the reproducibility and statistical significance of the results. Relative error of about 5% is typical for LO and ER measurements. It is not shown in Figures 1 and 2 to avoid overcrowding the figures.

No sample except #12 - NaI: 0.25%Tl, 0.2%Ba, 0.1%Eu, shows better LO than the commercial or even homemade reference (Fig. 1). For #12, LO is 47,000 ph/MeV. In the case of ER, designs #2, #6 and #10 (all Ca²⁺ co-doped) showed results better than the homemade reference of 7% at 662 keV. Sr²⁺ co-doped #11 and Ba²⁺ co-doped #12 showed ER even better than the commercial reference (6.3%) - 6.1% and 5.9%, respectively.

Using LO and ER values as two independent output parameters, the optimal Tl+ concentration, alkaline earth element and concentration, and Eu²⁺ concentration are determined with multi-regression analysis using various DoE packages in the statistical language R [13, 23]. From this analysis, one determines which dopants and concentrations are most effective in enhancing the LO and decreasing the ER of NaI.

For both parameters LO and ER, the optimal concentration of dopant and co-dopants coincides and is calculated as 0.25 mol % Tl⁺, 0.2 mol % Ca2+ and 0.1 mol % Eu²⁺. A sample with corresponding levels is synthesized using exactly the same melt-mix technique as for the orthogonal experimental set. The sample with these dopant concentrations has a LO of 42,800 ph/MeV, and a 5.4% ER at 662 keV.

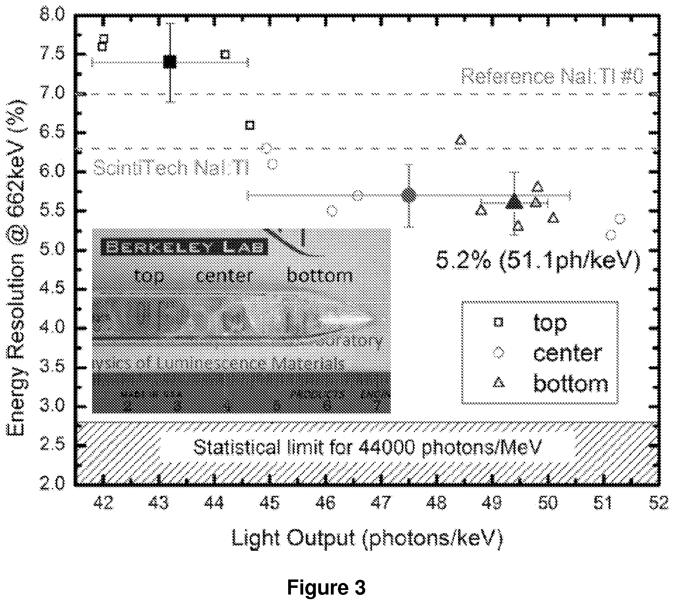

The same compound NaI: 0.25%Tl, 0.2%Ca, 0.1%Eu with optimal dopant concentrations, is grown in single crystalline form using the vertical Bridgman-Stockbarger technique, in order to obtain superior crystallinity to the melt-mix samples. Single crystal samples ae synthesized in quartz tubes under argon, attached to a vacuum pump overnight, and wrapped in heating tape at about 200 °C, in order to remove latent moisture. Once vacuum sealed, samples are suspended in a vertical Bridgman furnace and translated through a thermal gradient of 10 °C/cm at a rate of 0.8-2.0 mm/hour. A picture of the crystal is shown as an inset in Fig.3. Better crystallinity of the samples produced a LO of 51,300 ph/MeV and an ER of 5.2% at 662 keV for the best pieces of the crystal as shown in Fig. 3.

There emerges a significant difference in LO and ER between the top, center, and bottom parts of the crystal. The most consistent results are obtained for the bottom part: ER from 5.3% to 6.4% and LO from 48,400 ph/MeV to 50,100 ph/MeV; at the same time the best ER - 5.2% and LO - 51,300 ph/MeV are measured for single crystalline pieces from the central part. Also as shown in Fig. 3, the top part of the boule has a yellow layer, which is a clear indication of inhomogeneous dopant distribution or segregation during the growth. To identify the actual concentration of dopants inside the NaI lattice, pieces from the top, center, and bottom parts of the boule are analyzed by Inductively Coupled Plasma Mass Spectrometry (ICP-MS) analysis.

According to ICP-MS results, the concentrations of dopants are as follows: top portion - Tl - 14641 ppm wt, Ca - 580 ppm wt, Eu - 890 ppm wt; center - Tl - 1500 ppm wt, Ca - 490 ppm wt, Eu - 940 ppm wt; and bottom portion - Tl - 880 ppm wt, Ca - 580 ppm wt, and Eu - 940 ppm wt. There is only minor inhomogeneity in Ca and Eu distribution throughout the crystal, as 0.2% Ca corresponds to 540 ppm wt, and 0.1%Eu corresponds to 1000 ppm wt, but there is quite significant Tl segregation. Nominal 0.25% Tl concentration in the melt corresponds to 3470 ppm wt. In the central and bottom parts of the crystal, it is only 43% and 25% of this, respectively.

A second crystal with 0.1 mol % Tl⁺ is grown using the same Bridgman-Stockbarger technique. This sample produces a light output of 52,020 ph/MeV and an energy resolution of 4.9±0.2% at 662 keV. The photopeak from this crystal, acquired using a ¹³⁷Cs source, is shown in Fig.4 in comparison with the photopeak of the commercial sample of the same size (about 10 mm³).

The energy resolution of NaI:Tl is improved down to 4.9%, and the light output up to 52,000 ph/MeV by co-doping with Eu and Ca, which are an improvement in the ER and LO of commercially available NaI samples.

These inorganic scintillator crystals are useful for national security purposes, such as detecting nuclear material.

References cited in Example 1 herein:
1. R. Hofstadter, Phys. Rev.74, 100 (1948).
2. E.D. Bourret-Courchesne, G.A. Bizarri, R. Borade, G. Gundiah, E.C. Samulon, Z. Yan, S.E. Derenzo, Crystal growth and characterization of alkali-earth halide scintillators, J. Cryst. Growth 352 (1) 78-83 (2012).
3. D. Engelkemeir, Rev. Sci. Instrum.27, 589 (1956).
4. P. A. Rodnyi et al Phys. Status Solidi B 187, 15 (1995).
5.I. V. Khodyuk and P. Dorenbos, IEEE Trans. Nucl. Sci.59, 3320 (2012).
6. H. G. Hanson, J. Chem. Phys. 23 (8), 1391-1397 (1955).
7. S.C. Sabharwal, et al. NIM A 255, p 501-506 (1987).
8. N. Shiran et al. Optical Materials 32 1345-1348 (2010).
9. M. S. Alekhin et al. Appl. Phys. Lett.102, 161915 (2013).
10. M. Moszynski et al IEEE Trans. Nucl. Sci., VOL. 50, NO. 4, AUGUST 2003
11. P. A. Rodnyi, Physical Processes in Inorganic Scintillators (CRC, Boca Raton, New York 1997)
12. J. T. M. de Haas and P. Dorenbos, IEEE Trans. Nucl. Sci.55, 1086 (2008).
13. J. J. Faraway Practical Regression and Anova using R (http://cran.r-project.org/doc/contrib/Faraway-PRA.pdf)
14. B. A. Buninet al. Proc. Natl Acad. Sci. USA 91, 4708-4712 (1994).
15. X.-D. Xianget al. Science 268, 1738-1740 (1995).
16. E. Danielsonet al. Nature389, 944-948 (30 October 1997)
17. X.-D. Xiang, I. Takeuchi, Combinatorial Material Synthesis (Taylor & Francis 2005).
18. R. A. Potyrailo and W. F. Maier, Combinatorial and High-Throughput Discovery and Optimization of Catalysts and Materials. (CRC Press, 2007) p. 406-437.
19. L. Chen et al Luminescence 26, 229-238 (2011).
20. S.E. Derenzoet al IEEE Trans. Nucl. Sci. 55 (3) 1458-1463 (2008).
21. G. Taguchi, S. Chowdhury, Y. Wu Taguchi's quality engineering handbook (John Wiley & Sons, Inc., Hoboken, New Jersey 2005).
22. R. KRoy. Taguchi Method. (Society of Manufacturing Engineers, Dearborn, Michigan, 1990)
23. U. Groemping, CRAN.R-Project.org. CRAN Task View: Design of Experiments (DoE) & Analysis of Experimental Data. Accessed July 2014. <found at the website for: cran.r-project.org/web/views/ExperimentalDesign.html>

### EXAMPLE 2

### Combinatorial approach to NaI energy resolution optimization via co-doping with Eu2+ and alkaline earth metals

A combinatorial approach where doped bulk scintillator materials can be rapidly optimized for their properties through concurrent extrinsic doping/co-doping strategies is presented. The concept that makes use of design of experiment, rapid growth and evaluation techniques, and multivariable regression analysis, has been successfully applied to the engineering of NaI performance, a historical but mediocre performer in scintillation detection. Using this approach, we identified a three-element doping/co-doping strategy that significantly improves the material performance. The composition was uncovered by simultaneously screening for a beneficial co-dopant ion among the alkaline earth metal family and by optimizing its concentration and that of Tl⁺ and Eu²⁺ ions. The composition with the best performance was identified as 0.1% mol Tl⁺, 0.1% mol Eu²⁺ and 0.2% mol Ca²⁺. This formulation shows enhancement of energy resolution and light output at 662 keV, from 6.3 to 4.9%, and from 44,000 to 52,000 ph/MeV, respectively. The method, in addition to improving NaI performance, provides a versatile framework for rapidly unveiling complex and concealed correlations between material composition and performance, and should be broadly applicable to optimization of other material properties.

### I. Introduction

The discovery and optimization of multi-element compounds out of a large combinatorial space is a daunting task. It has been especially challenging for doped bulk gamma detector materials where one has to account for concentrations ranging over several orders of magnitude, from elemental composition (lattice) to ppm levels (dopants). This large compositional space has definitely challenged and slowed down the development of the next generation of scintillator materials, where despite an increasing theoretical understanding of the material/performance relationship, the process is predominantly developed through a time-consuming Edisonian approach¹. Even for relatively simple binary systems, computational techniques are still falling short of fully comprehending the complex interplay between composition, energy flow and material performance. While the use of combinatorial optimization approach in order to account for large parameter space has been profitable for thin film and powder forms material development², it has only been marginally successful when applied to bulk material. The difficulties to rapidly synthesize single crystal materials and to measure representative bulk properties, such as gamma response, have always impeded the extraction of clear trend or patterns.

We present here a combinatorial optimization approach in which doped bulk scintillator materials can be optimized for their properties through concurrent extrinsic doping/co-doping strategies. The combinatorial optimization approach that was used relies on finding an optimum formulation for the material among a finite set of samples which has been designed following few driving lines minimizing the number of samples to be synthesized, but not as in the restricted definition of combinatorial chemistry approach³. By using "bulk scintillator material" we mean that the response of the material under gamma ray excitation was used to direct the study. This is important and fundamentally different from other published approaches (powder and thin film), as gamma ray can only be absorbed over an extended volume of the material. To our knowledge this is the first attempt to employ a combinatorial optimization approach for single crystalline materials discovery and improvement.

The concept relies on a three-step process: (i) experimental planning and the application of design of experiment (DoE), (ii) material synthesis and characterization with the use of rapid single crystal growth and evaluation techniques, and (iii) data analysis leveraging response surface and multivariable regression analysis methods. The core of the design of experiment used revolves around a Taguchi method⁴ which is particularly well adapted to simultaneously study multiple factors influence on a targeted output parameter. The arrangement of the experimental set, an orthogonal array^{5,6}, is designed to explore and optimize the material performance in a multi-dimensional space using the least possible number of experiments. This framework was coupled to the LBNL high-throughput synthesis and characterization facility⁷ to rapidly produce and evaluate single crystalline samples based on a non-directional solidification technique⁸.

The entire approach was applied to NaI:Tl and engineering of its performance, both energy resolution and light output wise. The choice of NaI:Tl was twofold: (i) its importance for the scintillation field, and (ii) the long-lasting scientific challenge to understand, control and improve its performance. Sixty-five years after its discovery by Hofstadter⁹ in 1948, and despite the recent onset of brighter, faster and denser materials¹⁰, NaI:Tl is still the main workhorse for ionizing radiation detection where cost is a prime factor. This cost benefit has invariably shifted the balance toward NaI as foremost choice for large area detector applications such as large portals for security tasks and gamma-ray medical cameras. However, NaI cannot be a definite choice or ideal solution due to its performance. NaI:Tl performance is considered as mediocre with a moderate light output (LO) of 44,000 photons/MeV and a poor energy resolution (ER) of at best 6.3% at 662 keV^{11,12}. Improving its performance has been an important scientific challenge for the scintillation community. Most of the efforts have been directed toward crystal growth process optimization and/or extrinsic element addition to the melt. For the latter, a large portion of the periodic table has been tested for its potential benefit for improving energy transfer and scintillation efficiency^{13,14}. Most of the elements were found to be at most transparent to NaI performance. Those included Mn, Pb, Ag, oxides, chalcogens, and halogens at low concentrations¹⁴. To our knowledge, the best published results of NaI performance are from Shiran *et al.* where adding Eu²⁺ to NaI:Tl showed an improvement of the light output (48,000 photons/MeV) and of the energy resolution (6.2%)^{11,15}. Recently, there has been a renewed interest among the scintillator community to revisited co-doping strategies. The main driving force was the successful demonstration that co-doping LaBr₃:Ce³⁺ with 200 ppm of Sr considerably improves the material energy resolution, from 2.7% to 2.0% at 662 keV¹⁶

### II. Experimental design and techniques

These endeavors enticed us to revisit the engineering of NaI using multi-element doping/co-doping strategy. The experimental planning, largely driven by the studies summarized here before, was devised to simultaneously study and optimize NaI energy resolution and light output at 662 keV as a function of the Tl⁺ concentration ([Tl⁺]), the addition of a co-dopant ion chosen among alkaline earth metal family (type, IIA and concentration [IIA²⁺]), and the concentration of a second emitting center, europium ([Eu²⁺]). Leveraging the work of Taguchi⁴, the compositional space was explored through experimental set organized to form a L₁₆ orthogonal array (4 levels per parameter, also called factors - Table 3). This arrangement that can be classified as fractional factorial design¹⁷ allows for simultaneous surveying the main effect of the factors on the targeted objectives while drastically reducing the number of required experiments. A 4-factors/4 levels full factorial design will require an unpractical set of 256-experiments to cover the same combinatorial space. A reference sample, NaI:Tl⁺ doped with 0.1 mol % Tl⁺, was included in the experimental set listed in Table 4 for control and comparison purposes. All the concentrations are given in mole percent and correspond to the nominal concentration of the starting materials.

**Table 3. Factors and levels used to design the experiment.**

| Factor | Level 1 | Level 2 | Level 3 | Level 4 |
|---|---|---|---|---|
| [Tl⁺] mol% | 0.0 | 0.1 | 0.25 | 0.5 |
| IIA | Mg | Ca | Sr | Ba |
| [IIA] mol% | 0.**1** | 0.2 | 0.4 | 0.8 |
| [Eu²⁺] mol% | 1.0 | | 0.1 | 0.0 |

The 17 samples (Table 4) were synthesized at the LBNL high-throughput synthesis and characterization facility following a non-directional solidification approach using 5N pure anhydrous beads of Nal, MgI₂, CaI₂, SrI₂, BaI₂, TiI and EuI₂ from Sigma-Aldrich as starting material. The sample preparation, weigh and ampoule encapsulation was done in an argon-filled drybox maintained below 0.1 ppm of O₂ and H₂O. The ampoules were then sealed under dynamic vacuum pumping using a hydrogen-oxygen torch, and placed in a horizontal furnace, oriented at 45° in order to facilitate convection-driven mixing. The samples were heated to 675°C to melt the NaI (melting point 661°C) and held at this temperature for 6 hours, in order to homogenize the liquefied contents of the quartz ampoule. The samples were then cooled down to 300°C at 0.1 °C/min, to allow for solid-state diffusion of inhomogeneities. Below 300°C the samples were cooled at 10 C/hr. After solidification all samples were transferred back inside the dry box and prepared for characterization in form of slides with powder for x-ray diffraction (XRD), about 2×2×2 mm³ single crystalline pieces for pulse height measurements (PHM) and airtight quartz cuvettes filled with 0.5-2 mm³ crystal pieces for x-ray luminescence (XRL) measurements.

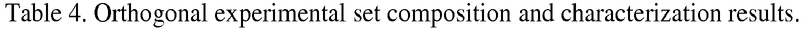

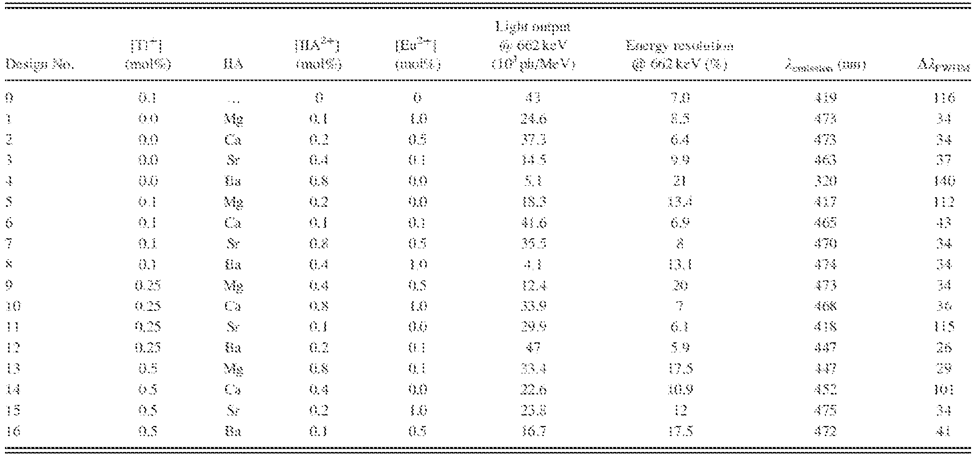

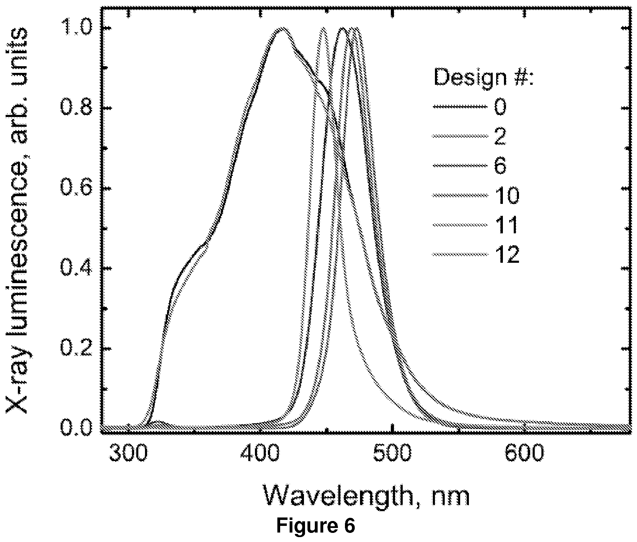

The correct crystal structure phase of each sample was confirmed measuring their XRD patterns with a Bruker Nonius FR591 with a rotating anode X-ray generator (CuK radiation). A minimum of 3 crystal pieces per composition was selected for pulse-height measurements under ¹³⁷Cs excitation. Spectra were collected using Hamamatsu R6231-100 photomultiplier tube (PMT) set to -700V connected to a Canberra 2005 preamplifier, a Canberra 2022 spectroscopic amplifier, and an Amptek MCA multichannel analyzer. Samples were optically coupled onto the window of the PMT with Viscasil 600,000 (GE) optical grease, and covered with layers of reflecting tape. A 12 µs shaping time was used to ensure full collection of the emitted light. A satisfactory signal-to-noise ratio was ensured by collecting at least 10,000 events in the photopeak. The photopeak centroid and full-width at half-maximum were determined by using a superposition of two Gaussian functions for the photopeak and an x-ray escape peak, and of an exponential background. The light output was corrected for the PMT quantum efficiency by accounting for the x-ray excited emission spectrum of each composition due to the red shift of the x-ray luminescence that can be observed for samples with higher Eu²⁺ concentration. Positions of the emission maxima as well as overall scintillation efficiency of the Eu²⁺ doped crystals indicate presence of radiative/non-radiative energy transfer from Tl⁺ to Eu²⁺ luminescence centers. Selected XRL spectra, measured on the airtight quartz cuvettes, are shown in Fig. 6 and their emission maxima and FWHM are listed in Table 4. The light output was estimated by comparison of the photopeak position of the sample of interest with the response of a 10 mm³ commercial NaI:Tl crystal from ScintiTech¹⁸ measured under identical conditions.

### III. Results and discussion

Light output and energy resolution values are presented in Table 4. The commercial and homemade samples give a respective LO of 44,000 ph/MeV and 43,000 ph/MeV and an energy resolution of 6.3% and 7% at 662 keV. Based on the spread of the values measured on the same composition, the experimental error was estimated of about 5% for the light output and energy resolution values. No sample except #12 (NaI: 0.25%Tl, 0.2%Ba, 0.1%Eu) with 47,000 ph/MeV showed a better LO than the commercial or even homemade references. For the ER, designs #2, #6 and #10 (all Ca²⁺ co-doped) showed better results than the homemade reference and #11 (Sr²⁺ co-doped) and #12 (Ba²⁺ co-doped) showed ER better than the commercial reference with 6.1% and 5.9%, respectively.

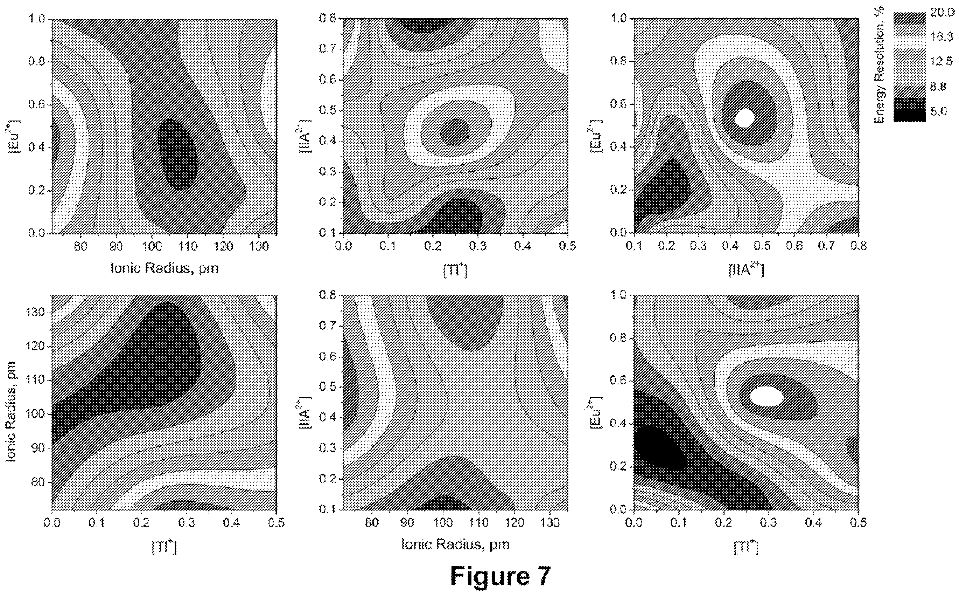

The 2D response maps were determined based on the results from Table 4 using the DOE.base package from the language R¹⁹ and Qualiteck-4⁵ software. The maps allow for an estimation of which explanatory factors have an impact on the light output and energy resolution as well as a determination of which compositional set gives the optimal response within the combinatorial space explored. To bypass the non-mathematic formulation and inherent granularity of the factor co-dopant ion type (IIA), we substitute the factor ion type by its associated ionic radius in pm. The maps for the energy resolution are presented in Fig. 7. For the LO and the ER, the optimal response coincided with the composition 0.25 mol % Tl⁺, 0.2 mol % Ca²⁺ and 0.1 mol % Eu²⁺.

To test the validity of the multivariable regression analysis output, two additional samples were synthesized with the optimal composition formula. The first sample was synthesized using the analogous non-directional solidification approach while the second one was grown using a conventional vertical Bridgman-Stockbarger technique. For the latter, the reactants were heated at about 200 °C under vacuum to remove residual moisture. The growth was conducted in a sealed ampoule suspended in a vertical Bridgman furnace and translated through a thermal gradient of 10 °C/cm at a rate of 0.8-2.0 mm/hour. The crystal was 10 mm in diameter and about 6 cm long.

Both samples were characterized for their light output and energy resolution at 662keV. The first sample gave the best results among the non-directional solidification sample set with a LO of 48,200 ph/MeV, and ER of 5.4%. For the Bridgman grown sample, measurements were taken on several samples collected along the direction growth axis, bottom, middle and top.

**Table 5. Concentration of Tl⁺, Ca²⁺, and Eu²⁺ in NaI lattice according to ICP-MS (ADD mol%).**

| Position in the boule | [Tl⁺] | | [Ca²⁺] | | [Eu²⁺] | |
|---|---|---|---|---|---|---|
| | (ppm wt.) | (mol%) | (ppm wt.) | (mol%) | (ppm wt.) | (mol%) |
| Nominal in melt | 3470 | 0.25 | 540 | 0.20 | 1000 | 0.10 |
| Top | 14 | 0.05 | 580 | 0.21 | 890 | 0.09 |
| Center | 1500 | 0.11 | 490 | 0.18 | 940 | 0.09 |
| Bottom | 880 | 0.06 | 580 | 0.21 | 940 | 0.09 |

The light output and energy resolution values as a function of the position along the growth direction are presented in Fig. 3. There emerged a significant difference in LO and ER between the top, center, and bottom parts of the crystal. The absolute best results were obtained for two crystals selected from the center part with ER of 5.2% and LO of 51,100 ph/MeV. In term of average values, the crystals selected from the bottom part shows a better uniformity in their response. Variation of the scintillation performance was expected due to the different segregation coefficients of the dopants and co-dopant. Dopants and co-dopant segregations can lead to a significant non-uniformity of their concentration distribution along the crystal. While the approach succeed to underline the beneficial pattern of using Tl⁺, Eu²⁺ and Ca²⁺ as a set, the approach lacks of accuracy when it comes to quantify the optimum concentration of highly segregating elements. The level, nominal concentration of the elements is not descriptive enough and leads to loosen the constraint imposed by the data set on the output of the multivariable regression analysis.

To determine actual concentration of the elements along the growth axis inductively coupled plasma mass spectrometry has been done. As shown on the quantitative elemental distribution of the Tl⁺, Ca²⁺ and Eu²⁺ (Table 5), thallium is heavily segregated during the growth. This is clearly noticeable on the picture of the crystal presented in the inset of Fig. 3 where a clear yellow layer, corresponding to a high thallium concentration area, is visible at the top of the boule. However, there is only minor inhomogeneity in Ca²⁺ and Eu²⁺ distribution throughout the crystal.

To better quantify the optimal thallium concentration, a second crystal with 0.1 mol % Tl⁺ was grown using the same Bridgman-Stockbarger technique. Single crystalline pieces from different parts of the crystal show LO above 50,000 ph/MeV and ER around 5.0% at 662keV. The best light output of 52,000 ph/MeV and an energy resolution of 4.9% at 662 keV were recorded for one of the crystals from the middle part of the boule. The photopeak from this crystal is shown in Fig.4 in comparison with the commercial and homemade reference samples.

While the statistical analysis can objectify the process of looking for patterns in complex experimental data sets, it manifestly does not provide what one makes of the pattern once discerned. In the triple doped NaI case, the underlying physics is certainly related to multiple mechanisms that work in synergy toward the improvement of LO and energy resolution:
(i) Impurity removal - Halide materials even when processed and synthesized in oxygen and moisture free atmosphere contain substantial amount of O²⁻ and OH⁻ impurities^{20,21}. Ca and Eu have very high oxygen affinity values pO = 55.5 and 53.0 for oxygen in equilibrium at 1000°K²², respectively, and can reduce Na and Tl in the melt and act as compounds removing anionic oxygen-containing admixtures²¹. Absence or passivation of isolated hole traps related to O²⁻ and OH⁻ can improve probability of carriers recombination on luminescence centers leading to higher LO. At the same time improvement of ER indicates that there is a strong influence of the co-dopants on the energy transfer.
(ii) Beneficial defect creation - According to calculations²³ done for other halide scintillator - Ce-doped LaBr₃, where improvement of ER was observed after Sr²⁺ and Ca²⁺ co-doping¹⁶, capture of non-thermalized electrons on Br⁻ vacancies is the primary mechanism during the early stages of the scintillation process. Aliovalent co-doping of LaBr₃ substantially increases concentration of the anion vacancies and at the same time making their levels energetically shallower, closer to the conduction band edge. Trapping on such complexes significantly reduces carrier density during the thermalization stage and consequently leads to lower non-radiative recombination/quenching. Subsequent release of the electrons leads to luminescence and improved ER. We believe that similar processes are taking place in NaI doped with Tl⁺, Ca²⁺ and Eu²⁺, but in our case with regard to both carrier types - holes and electrons.
(iii) Tl-Eu energy transfer maximization - Eu²⁺ when doped in NaI enters the lattice as a complex with the cation vacancy [Eu²⁺_{Na} + Vac_{Na}]²⁴ and can act as an efficient hole trap. At the same time according to recent calculations²⁵ in NaI codoped with Tl⁺ and Ca²⁺ DX-like acceptor complexes [Tl⁰_{Na} + Ca²⁺_{Na}] are energetically favorable to form. These complexes can act as deep electron traps with energy levels about 1eV below the conduction band minimum. If we assume existence of spatial correlation between [Eu²⁺_{Na} + Vac_{Na}] and [Tl⁰_{Na} + Ca²⁺_{Na}] resonant type energy transfer can lead to improved efficiency of the europium luminescence in triple-doped Nal.

### IV. Conclusion

In this study, we present a combinatorial approach allowing to rapidly exploring the relationships between material composition and material properties. To the authors' knowledge it is the first report of the application of this technique to the optimization of doped bulk scintillators performance. The approach is particularly adapted to guide the development of detector and luminescent materials where the compositional landscape becomes more and more complex due to a large number of variables and/or complex interdependencies of the factors as well as the extremely demanding level of performance required.

The approach was successfully applied to the optimization of the light output and energy resolution of NaI as a function of multiple elements doping/co-doping strategies. The results show a drastic improvement of both properties. Optimized sample shows an improvement of its energy resolution down to 4.9% at 662 keV and a light output up to 52,000 ph/MeV. To the authors' knowledge, these values are the best ever reported for a room temperature NaI scintillator. It is expected that the performance of NaI can still be improved by narrowing compositional space toward the optimal composition and by improving the crystal growth process and purification of the starting materials. The literature gives indication of the potential intrinsic value that can be reached with Nal. Undoped NaI light output at 662 keV has been reported²⁶ above 80,000 ph/MeV when measured at liquid nitrogen temperature with an energy resolution of about 4%. This number is close to the theoretical limit for a material with a measured band gap of 5.8 eV. Reaching this level of performance while keeping production cost and ease of growth to its current levels will undeniably change the landscape of the radiation detection market.

Finally, it is reasonable to think that this combinatorial approach can be extended to other objectives and/or study of factor impact. For the latter, variables such as material stoichiometry and/or growth parameters (temperature gradient, atmosphere etc) are certainly a logical extension. Comparably targeting the optimization of other detector requirements such as minimization of the self-absorption in europium-doped materials or maximization of the neutron/gamma-ray discrimination in dual modality detectors is also a coherent direction of this work. However it is important to stress out a pivotal axiom of the approach: for the success of the method, the data cannot be collected without some preexisting ideas about what may or may not be relevant to the specific problem such as the factors to be assessed in a specific experimental design. There is no mathematical expression telling which particular variables must be examined in a given study. In our case, the decision was heavily driven by former experimental and theoretical studies.

References cited in Example 2 herein:
¹ Thomas P Hughes, in Technology at the Turning Point, edited by W. B. Pickett (San Francisco Press Inc., San Francisco, 1977), pp. 5.
² L. Chen, C. I. Chu, K. J. Chen, P. Y. Chen, S. F. Hu, and R. S. Liu, Luminescence 26 (4), 229 (2011).
³ Radislav A. Potyrailo and Wilhelm F. Maier, Combinatorial and high-throughput discovery and optimization of catalysts and materials. (CRC Taylor & Francis, Boca Raton, FL, 2007), pp.473 p.
⁴ Genichi Taguchi, Subir Chowdhury, Yuin Wu, Shin Taguchi, and Hiroshi Yano, Taguchi's quality engineering handbook. (John Wiley & Sons, Hoboken, N.J., 2005).
⁵ Ranjit K. Roy, Design of experiments using the Taguchi approach: 16 steps to product and process improvement. (Wiley, New York, 2001).
⁶ Ranjit K. Roy, A primer on the Taguchi method, 2nd ed. (Society of Manufacturing Engineers, Dearborn, MI, 2010).
⁷ S. E. Derenzo, M. S. Boswell, E. Bourret-Courchesne, R. Boutchko, T. F. Budinger, A. Canning, S. M. Hanrahan, M. Janecek, Q. Peng, Y. Porter-Chapman, J. D. Powell, C. A. Ramsey, S. E. Taylor, L. W. Wang, M. J. Weber, and D. S. Wilson, IEEE Trans. Nucl. Sci. 55 (3), 1458 (2008).
⁸ G. Gundiah, G. Bizarri, S. M. Hanrahan, M. J. Weber, E. D. Bourret-Courchesne, and S. E. Derenzo, Nucl. Instrum. Methods Phys. Res. A 652 (1), 234 (2011).
⁹ R. Hofstadter, Phys. Rev. 74 (1), 100 (1948).
¹⁰ E. D. Bourret-Courchesne, G. Bizarri, R. Borade, Z. Yan, S. M. Hanrahan, G. Gundiah, A. Chaudhry, A. Canning, and S. E. Derenzo, Nucl. Instrum. Methods Phys. Res. A 612 (1), 138 (2009); E. D. Bourret-Courchesne, G. Bizarri, S. M. Hanrahan, G. Gundiah, Z. Yan, and S. E. Derenzo, Nucl. Instrum. Methods Phys. Res. A 613 (1), 95 (2010); E. V. D. van Loef, P. Dorenbos, C. W. E. van Eijk, K. Kramer, and H. U. Gudel, Appl. Phys. Lett. 79 (10), 1573 (2001); N. J. Cherepy, G. Hull, A. D. Drobshoff, S. A. Payne, E. Van Loef, C. M. Wilson, K. S. Shah, U. N. Roy, A. Burger, L. A. Boatner, W. S. Choong, and W. W. Moses, Appl. Phys. Lett. 92 (8) (2008).
¹¹ N. Shiran, A. Gektin, Y. Boyarintseva, S. Vasyukov, A. Boyarintsev, V. Pedash, S. Tkachenko, O. Zelenskaya, and D. Zosim, Optical Materials 32 (10), 1345 (2010).
¹² Scintillation Properties http://scintillator.lbl.gov.
¹³ H. G. Hanson, Phys. Rev. 96 (3), 832 (1954); H. G. Hanson, J Chem Phys 23 (8), 1391 (1955).
¹⁴ S. C. Sabharwal, S. P. Kathuria, and B. Ghosh, Nucl. Instrum. Methods Phys. Res. A 255 (3), 501 (1987); S. C. Sabharwal and B. Ghosh, Cryst. Res. Technol. 22 (1), K5 (1987).
¹⁵ N. V. Shiran, A. V. Gektin, Y. Boyarintseva, S. Vasyukov, A. Boyarintsev, V. Pedash, S. Tkachenko, O. Zelenskaya, N. Kosinov, O. Kisil, and L. Philippovich, IEEE Trans. Nucl. Sci. 57 (3), 1233 (2010).
¹⁶ M. S. Alekhin, J. T. M. de Haas, I. V. Khodyuk, K. W. Kramer, P. R. Menge, V. Ouspenski, and P. Dorenbos, Appl. Phys. Lett. 102 (16) (2013).
¹⁷ Douglas C. Montgomery, Design and analysis of experiments, 7th ed. (Wiley, Hoboken, NJ, 2008).
¹⁸ ScintiTech http://www.scintitech.com.
¹⁹ J. J.Faraway Practical Regression and Anova using R http://cran.r-project.org/doc/contrib/Faraway-PRA.pdf; U. Groemping CRAN Task View: Design of Experiments (DoE) & Analysis of Experimental Data. http://cran.r-project.org/web/views/ExperimentalDesign.html.
²⁰ V. L. Cherginets, E. G. Khailova, and O. V. Demirskaya, Zh. Fiz. Khim. 71 (2), 371 (1997) (in Russian); F. K. Koschnick, J. M. Spaeth, R. S. Eachus, W. G. Mcdugle, and R. H. D. Nuttall, Phys. Rev. Lett. 67 (25), 3571 (1991).
²¹ T. P. Rebrova, V. L. Cherginets, Y. N. Dats'ko, and E. E. Voronkina, Russ. J. Inorg. Chem. 57 (3), 427 (2012) (in Russian).
²² Thomas B. Reed, Free energy of formation of binary compounds: an atlas of charts for high-temperature chemical calculations. (MIT Press, Cambridge Mass. 1971).
²³ D. Aberg, B. Sadigh, A. Schleife, and P. Erhart, Appl. Phys. Lett. 104 (21) (2014).
²⁴ P. Ivakhnen, Ia. Parfiano, and Ei. Shuralev, Izv. AN SSSR Fiz. 33 (5), 844 (1969) (in Russian).
²⁵ R. Adhikari, Q. Li, R. T. Williams, A. Burger, and K. Biswas, J. Appl. Phys. 116 (22) (2014).
²⁶ M. Moszynski, W. Czarnacki, W. Klamra, M. Szawlowski, P. Schotanus, and M. Kapusta, Nucl. Instrum. Methods Phys. Res. A 505 (1-2), 63 (2003).

## Claims

1. A crystal composition or inorganic scintillator having the formula:
MaI:Tl, Ln, A, X (I);
wherein Ma is Na, Cs, or Li, Ln is a lanthanide, or a mixture of lanthanides, A is an alkaline earth metal, and X is Sc, Ti, V, Cr, Mn, Fe, Co, Ni, Cu, Zn, Y, Zr, Pd, Ag, Cd, Hf, Ta, W, Pt, Au, Al, Ga, In, Ge, Sn, Pb, N, P, As, Sb, Bi, B, O, S, Se, Te, or a mixture thereof; wherein Tl has a molar percent with the following value: 0.000001mol% < [Tl] < 100 mol % or up to the solubility limit whatever is higher; Ln has a molar percent with the following value: 0.000001 mol % < [Ln] < 100 mol %; A has a molar percent with the following value: 0.000001 mol % < [A] < 100 mol %; X has a molar percent with the following value: 0 mol % ≤ [X] < 100 mol %.

2. The crystal composition or inorganic scintillator of claim 1, wherein Ma is Na.

3. The crystal composition or inorganic scintillator of claim 1, wherein Tl has a molar percent with the following value: 0.000001 mol % ≤ [Tl] ≤ 10 mol %.

4. The crystal composition or inorganic scintillator of claim 3, wherein Tl has a molar percent with the following value: 0.1 mol % ≤ [Tl] ≤ 0.5 mol %.

5. The crystal composition or inorganic scintillator of claim 1, wherein A is Mg, Ca, Sr, Ba, or a mixture thereof.

6. The crystal composition or inorganic scintillator of claim 1 or claim 5, wherein A has a molar percent with the following value: 0.000001 mol % ≤ [A] ≤ 10 mol %.

7. The crystal composition or inorganic scintillator of claim 1 or claim 5, wherein A has a molar percent with the following value: 0.1 mol % ≤ [A] < 0.8 mol %.

8. The crystal composition or inorganic scintillator of claim 1, wherein Ln is Eu.

9. The crystal composition or inorganic scintillator of claim 1 or claim 8, wherein Ln has a molar percent with the following value: 0.000001 mol % ≤ [Ln] ≤ 10 mol %.

10. The crystal composition or inorganic scintillator of claim 1 or claim 8, wherein Ln has a molar percent with the following value: 0.1 mol % ≤ [Ln] ≤ 1.0 mol %.

11. The crystal composition or inorganic scintillator of claim 1, wherein X is Zr, Al, Zn, Cd, Ga, In, or a mixture thereof.

12. The crystal composition or inorganic scintillator of claim 8, wherein Tl has a molar percent with the following value: 0.000001 mol % ≤ [Tl] ≤ 10 mol %, A has a molar percent with the following value: 0.000001 mol % ≤ [A] ≤ 10 mol %, and Ln has a molar percent with the following value: 0.000001 mol % ≤ [Ln] ≤ 10 mol %.

13. The crystal composition or inorganic scintillator of claim 8, wherein Tl has a molar percent with the following value: 0.1 mol % ≤ [Tl] ≤ 0.5 mol %, A has a molar percent with the following value: 0.1 mol % ≤ [A] ≤ 0.8 mol %, and Ln has a molar percent with the following value: 0.1 mol % ≤ [Ln] ≤ 1.0 mol %.

14. The crystal composition or inorganic scintillator of claim 11, wherein Ma is Na, A is Mg, Ca, Sr, Ba, or a mixture thereof; Ln is Eu; and, X is Zr, Al, Zn, Cd, Ga, In, or a mixture thereof.

15. The crystal composition or inorganic scintillator of claim 1 or claim 14, wherein Ma is Na, Tl has a molar percent with the following value: 0.000001 mol % ≤ [Tl] ≤ 10 mol %; A is Mg, Ca, Sr, Ba, or a mixture thereof, and has a molar percent with the following value: 0.000001 mol % ≤ [A] ≤ 10 mol %; Ln is Eu, and has a molar percent with the following value: 0.000001 mol % ≤ [Ln] ≤ 10 mol %; and, X is Zr, Al, Zn, Cd, Ga, In, or a mixture thereof.

16. The crystal composition or inorganic scintillator of claim 1 or claim 15, wherein Ma is Na, Tl has a molar percent with the following value: 0.1 mol % ≤ [Tl] ≤ 0.5 mol %; A Mg, Ca, Sr, Ba, or a mixture thereof, and has a molar percent with the following value: 0.1 mol % ≤ [A] ≤ 0.8 mol %; Ln is Eu, and has a molar percent wi th the following value: 0.1 mol % ≤ [Ln] ≤ 1.0 mol %; and, X is Zr, Al, Zn, Cd, Ga, In, or a mixture thereof.

## Patentansprüche

1. Kristallzusammensetzung oder anorganischer Szintillator mit der Formel:
Mal:Tl, Ln, A, X (I);
wobei Ma für Na, Cs oder Li steht, Ln ein Lanthanid oder eine Mischung von Lanthaniden ist, A ein Erdalkalimetall ist und X für Sc, Ti, V, Cr, Mn, Fe, Co, Ni, Cu, Zn, Y, Zr, Pd, Ag, Cd, Hf, Ta, W, Pt, Au, AI, Ga, In, Ge, Sn, Pb, N, P, As, Sb, Bi, B, O, S, Se, Te oder eine Mischung davon steht; wobei TI einen Molprozentsatz mit dem folgenden Wert hat:
0,000001 Mol-% < [TI] <100 Mol-% oder bis zur Löslichkeitsgrenze, je nachdem, welcher Wert höher ist;
wobei Ln einen Molprozentsatz mit dem folgenden Wert hat: 0,000001 Mol-% < [Ln] <100 Mol-%;
wobei A einen Molprozentsatz mit dem folgenden Wert hat: 0,000001 Mol-% < [A] <100 Mol-%;
wobei X einen Molprozentsatz mit dem folgenden Wert hat: 0 Mol-% ≤ [X] <100 Mol-%.

2. Kristallzusammensetzung oder anorganischer Szintillator nach Anspruch 1, wobei Ma für Na steht.

3. Kristallzusammensetzung oder anorganischer Szintillator nach Anspruch 1, wobei TI einen Molprozentsatz mit dem folgenden Wert hat:
0,000001 Mol-% ≤ [TI] ≤10 Mol-%.

4. Kristallzusammensetzung oder anorganischer Szintillator nach Anspruch 3, wobei TI einen Molprozentsatz mit dem folgenden Wert hat:
0,1 Mol-% ≤ [TI] ≤ 0,5 Mol-%.

5. Kristallzusammensetzung oder anorganischer Szintillator nach Anspruch 1, wobei A für Mg, Ca, Sr, Ba oder eine Mischung davon steht.

6. Kristallzusammensetzung oder anorganischer Szintillator nach Anspruch 1 oder 5, wobei A einen Molprozentsatz mit dem folgenden Wert hat:
0,000001 Mol-% ≤ [A] ≤10 Mol-%.

7. Kristallzusammensetzung oder anorganischer Szintillator nach Anspruch 1 oder 5, wobei A einen Molprozentsatz mit dem folgenden Wert hat:
0,1 Mol-% ≤ [A] ≤ 0,8 Mol-%.

8. Kristallzusammensetzung oder anorganischer Szintillator nach Anspruch 1, wobei Ln für Eu steht.

9. Kristallzusammensetzung oder anorganischer Szintillator nach Anspruch 1 oder 8, wobei Ln einen Molprozentsatz mit dem folgenden Wert hat:
0,000001 Mol-% ≤ [Ln] ≤ 10 Mol-%.

10. Kristallzusammensetzung oder anorganischer Szintillator nach Anspruch 1 oder 8, wobei Ln einen Molprozentsatz mit dem folgenden Wert hat:
0,1 Mol-% ≤ [Ln] ≤10 Mol-%.

11. Kristallzusammensetzung oder anorganischer Szintillator nach Anspruch 1, wobei X für Zr, AI, Zn, Cd, Ga, In oder eine Mischung davon steht.

12. Kristallzusammensetzung oder anorganischer Szintillator nach Anspruch 8, wobei T1 einen Molprozentsatz mit dem folgenden Wert hat:
0,000001 Mol-% ≤ [Tl] ≤10 Mol-%, und A hat einen Molprozentsatz mit dem folgenden Wert:
0,000001 Mol-% ≤ [A] ≤10 Mol-%, und Ln hat einen Molprozentsatz mit dem folgenden Wert:
0,000001 Mol-% ≤ [Ln] ≤ 10 Mol-%.

13. Kristallzusammensetzung oder anorganischer Szintillator nach Anspruch 8, wobei Tl einen Molprozentsatz mit dem folgenden Wert hat:
0,1 Mol-% ≤ [Tl] ≤ 0,5 Mol-%, und A hat einen Molprozentsatz mit dem folgenden Wert:
0,1 Mol-% ≤ [A] ≤08 Mol-%, und Ln hat einen Molprozentsatz mit dem folgenden Wert:
0,1 Mol-% ≤ [Ln] ≤10 Mol-%.

14. Kristallzusammensetzung oder anorganischer Szintillator nach Anspruch 11, wobei Ma für Na ist steht, und A für Mg, Ca, Sr, Ba oder eine Mischung davon steht;
wobei Ln für Eu steht; und,
wobei X für Zr, Al, Zn, Cd, Ga, In oder eine Mischung davon steht.

15. Kristallzusammensetzung oder anorganischer Szintillator nach Anspruch 1 oder 14, wobei Ma für Na steht, wobei Tl einen Molprozentsatz mit dem folgenden Wert hat:
0,000001 Mol-% ≤ [Tl] ≤10 Mol-%;
wobei A für Mg, Ca, Sr, Ba oder eine Mischung davon steht und einen Molprozentsatz mit dem folgenden Wert hat:
0,000001 Mol-% ≤ [A] ≤10 Mol-%;
wobei Ln für Eu steht, und einen Molprozentsatz mit dem folgenden Wert hat:
0,000001 Mol-% ≤ [Ln] ≤ 10 Mol-%; und,
wobei X für Zr, Al, Zn, Cd, Ga, In oder eine Mischung davon steht.

16. Kristallzusammensetzung oder anorganischer Szintillator nach Anspruch 1 oder 15, wobei Ma für Na steht, wobei Tl einen Molprozentsatz mit dem folgenden Wert hat:
0,1 Mol-% ≤ [Tl] ≤ 0,5 Mol-%;
wobei A für Mg, Ca, Sr, Ba oder eine Mischung davon steht und einen Molprozentsatz mit dem folgenden Wert hat:
0,1 Mol-% ≤ [A] ≤08 Mol-%;
wobei Ln für Eu steht, und einen Molprozentsatz mit dem folgenden Wert hat:
0,1 Mol-% ≤ [Ln] ≤10 Mol-%; und,
wobei X für Zr, Al, Zn, Cd, Ga, In oder eine Mischung davon steht.

## Revendications

1. Composition cristalline ou scintillateur inorganique ayant la formule :
Mal:Tl, Ln, A, X (I) ;
Ma représentant Na, Cs ou Li, Ln étant un lanthanide ou un mélange de lanthanides, A étant un métal alcalino-terreux et X représentant Sc, Ti, V, Cr, Mn, Fe, Co, Ni, Cu, Zn, Y, Zr, Pd, Ag, Cd, Hf, Ta, W, Pt, Au, Al, Ga, In, Ge, Sn, Pb, N, P, As, Sb, Bi, B, O, S, Se, Te, ou un mélange de ceux-ci ; TI ayant un pourcentage molaire de la valeur suivante : 0,000001 % molaire < [TI] <100 % molaire ou jusqu'à la limite de solubilité, la valeur retenue étant toujours la plus élevée ;
Ln ayant un pourcentage molaire de la valeur suivante : 0,000001 % molaire < [Ln] <100 % molaire ; A ayant un pourcentage molaire de la valeur suivante : 0,000001 % molaire < [A] <100 % molaire ; X ayant un pourcentage molaire de la valeur suivante : 0 % molaire ≤ [X] <100 % molaire.

2. Composition cristalline ou scintillateur inorganique selon la revendication 1, Ma représentant Na.

3. Composition cristalline ou scintillateur inorganique selon la revendication 1, TI ayant un pourcentage molaire de la valeur suivante : 0,000001 % molaire ≤ [TI] ≤10 % molaire.

4. Composition cristalline ou scintillateur inorganique selon la revendication 3, TI ayant un pourcentage molaire de la valeur suivante : 0,1 % molaire ≤ [TI] ≤ 0,5 % molaire.

5. Composition cristalline ou scintillateur inorganique selon la revendication 1, A représentant Mg, Ca, Sr, Ba, ou un mélange de ceux-ci.

6. Composition cristalline ou scintillateur inorganique selon la revendication 1 ou la revendication 5, A ayant un pourcentage molaire de la valeur suivante : 0,000001 % molaire ≤ [A] ≤10 % molaire.

7. Composition cristalline ou scintillateur inorganique selon la revendication 1 ou la revendication 5, A ayant un pourcentage molaire de la valeur suivante : 0,1 % molaire ≤ [A] ≤ 0,8 % molaire.

8. Composition cristalline ou scintillateur inorganique selon la revendication 1, Ln représentant Eu.

9. Composition cristalline ou scintillateur inorganique selon la revendication 1 ou la revendication 8, Ln ayant un pourcentage molaire de la valeur suivante : 0,000001 % molaire ≤ [Ln] ≤ 10 % molaire.

10. Composition cristalline ou scintillateur inorganique selon la revendication 1 ou la revendication 8, Ln ayant un pourcentage molaire de la valeur suivante : 0,1 % molaire ≤ [Ln] ≤ 1,0 % molaire.

11. Composition cristalline ou scintillateur inorganique selon la revendication 1, X représentant Zr, Al, Zn, Cd, Ga, In ou un mélange de ceux-ci.

12. Composition cristalline ou scintillateur inorganique selon la revendication 8, Tl ayant un pourcentage molaire de la valeur suivante : 0,000001 % molaire ≤ [Tl] ≤10 % molaire, A ayant un pourcentage molaire de la valeur suivante : 0,000001 % molaire ≤ [A] ≤10 % molaire, et Ln ayant un pourcentage molaire de la valeur suivante : 0,000001 % molaire ≤ [Ln] ≤ 10 % molaire.

13. Composition cristalline ou scintillateur inorganique selon la revendication 8, Tl ayant un pourcentage molaire de la valeur suivante : 0,1 % molaire ≤ [Tl] ≤ 0,5 % molaire, A ayant un pourcentage molaire de la valeur suivante : 0,1 % molaire ≤ [A] ≤08 % molaire, et Ln ayant un pourcentage molaire de la valeur suivante : 0,1 % molaire ≤ [Ln] ≤ 1,0 % molaire.

14. Composition cristalline ou scintillateur inorganique selon la revendication 11, Ma représentant Na, A représentant Mg, Ca, Sr, Ba, ou un mélange de ceux-ci ; Ln représentant Eu ; et, X représentant Zr, Al, Zn, Cd, Ga, In ou un mélange de ceux-ci.

15. Composition cristalline ou scintillateur inorganique selon la revendication 1 ou la revendication 14, Ma représentant Na, Tl ayant un pourcentage molaire de la valeur suivante : 0,000001 % molaire ≤ [Tl] ≤ 10 % molaire ; A représentant Mg, Ca, Sr, Ba, ou un mélange de ceux-ci, et ayant un pourcentage molaire de la valeur suivante : 0,000001 % molaire ≤ [A] ≤ 10 % molaire ; Ln représentant Eu et ayant un pourcentage molaire de la valeur suivante : 0,000001 % molaire ≤ [Ln] ≤ 10 % molaire ; et, X représentant Zr, Al, Zn, Cd, Ga, In ou un mélange de ceux-ci.

16. Composition cristalline ou scintillateur inorganique selon la revendication 1 ou la revendication 15, Ma représentant Na, Tl ayant un pourcentage molaire de la valeur suivante : 0,1 % molaire ≤ [Tl] ≤ 0,5 % molaire ; A représentant Mg, Ca, Sr, Ba, ou un mélange de ceux-ci, et ayant un pourcentage molaire de la valeur suivante : 0,1 % molaire ≤ [A] ≤ 0,8 % molaire ; Ln représentant Eu et ayant un pourcentage molaire de la valeur suivante : 0,1 % molaire ≤ [Ln] ≤ 1,0 % molaire ; et, X représentant Zr, Al, Zn, Cd, Ga, In ou un mélange de ceux-ci.
